## Europäisches Patentamt
## European Patent Office
## Office européen des brevets

(19)

(11) Veröffentlichungsnummer: **0 161 469**
**B1**

(12)

# EUROPÄISCHE PATENTSCHRIFT

(45) Veröffentlichungstag der Patentschrift: 04.02.87

(51) Int. Cl.⁴: **C 02 F 3/28**

(21) Anmeldenummer: **85104157.4**

(22) Anmeldetag: **04.04.85**

(54) **Verfahren und Vorrichtung zum anaeroben Abbau von organischem Substrat.**

(30) Priorität: **19.04.84 DE 3414999**

(43) Veröffentlichungstag der Anmeldung:
**21.11.85 Patentblatt 85/47**

(45) Bekanntmachung des Hinweises auf die Patenterteilung:
**04.02.87 Patentblatt 87/6**

(84) Benannte Vertragsstaaten:
**AT BE CH DE FR GB IT LI NL SE**

(56) Entgegenhaltungen:
**EP-A-0 057 152**
**US-A-3 563 888**
**US-A-3 878 097**
**US-A-3 966 599**

(73) Patentinhaber: **Linde Aktiengesellschaft, Abraham-Lincoln- Strasse 21, D-6200 Wiesbaden (DE)**

(72) Erfinder: **Morper, Manfred, Dr. rer. nat., Zugspitzstrasse 13/0, D-8035 Gauting (DE)**

(74) Vertreter: **Schaefer, Gerhard, Dr., Linde Aktiengesellschaft Zentrale Patentabteilung, D-8023 Höllriegelskreuth (DE)**

EP 0 161 469 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1967

## Beschreibung

Die Erfindung betrifft ein Verfahren zum anaeroben Abbau von organischem Substrat, bei dem zu behandelndes organisches Substrat im Abwärtsstrom durch ein in einer Behandlungszone vorhandenes, der Ansiedlung von Mikroorganismen dienendes Filterbett geleitet wird und im Filterbett behandeltes Substrat in einem Umlauf vom unteren zum oberen Bereich der Behandlungszone zurückgeführt wird, sowie eine Vorrichtung zur Durchführung des Verfahrens.

Bei der anaeroben mikrobiellen Umwandlung von organischem Substrat weitgehend in Methan und Kohlendioxid ist ein wesentliches Problem dadurch gegeben, daß bei komplex zusammengesetztem Substrat ein Teil der als CSB ausgedrückten organischen Fracht in schwer metabolisierbarer Form, wie z.B. als ungelöste Feststoffe, Polymere oder polykondensierte Aromaten, vorliegt, und diese Stoffe durch fermentative Bakterien erst in angreifbare Teile zersetzt werden müssen, wodurch lange Reaktionszeiten und großvolumige Reaktoren erforderlich sind. Zur Verkürzung der Reaktionszeiten werden deshalb anaerobe Hochleistungsreaktoren eingesetzt, die in der Regel als aufwärts durchströmte Schlammbett-Reaktoren oder als abwärts durchströmte Filterbett-Reaktoren ausgebildet sind. In beiden Reaktortypen können hohe Raumabbauleistungen durch einen hohen Rückhaltungsgrad der nur langsam nachwachsenden anaeroben Biomasse verwirklicht werden.

Beim aufwärts durchströmten Schlammbett-Reaktor besteht jedoch insbesondere bei hoher hydraulischer Belastung und/oder bei hoher spezifischer Gasentwicklung die Gefahr, daß die Leistungsfähigkeit des Reaktors durch Schlammabtrieb, was einen Verlust an aktiver Biomasse bedeutet, beeinträchtigt wird. Außerdem ist das Zustandekommen eines hochkonzentrierten Schlammbetts auf das Vorhandensein von sich gut absetzendem körnigem Schlamm angewiesen, dessen Bildung aber nicht beeinflußt werden kann.

Beim abwärts durchströmten Filterbett-Reaktor ist ein wesentlicher Teil der Biomasse an Oberflächen von Trägerelementen oder bei offenzelliger Struktur der Trägerelemente im Inneren derselben fest fixiert. Zur Durchmischung, zur Vermeidung von Verstopfungen und zum Ausgleich von Spitzenbelastungen wird ein Vielfaches der Zulaufmenge vom unteren zum oberen Bereich des Filterbetts im Umlauf zurückgeführt. Die Beschickung im Abstrombetrieb hat dabei den Vorteil, daß störende Schaumbildungen unterbleiben. Nachteilig ist jedoch, daß ein wesentlicher Teil der nicht fixierten Biomasse mit dem Ablauf aus dem Reaktor ausgeschwemmt und dadurch die Abbauleistung des Reaktors beeinträchtigt wird. Außerdem können im Ablauf erhöhte Fettsäuregehalte, die geruchsbelästigungen nach sich ziehen, auftreten, da nicht die gesamte Menge des Zulaufs im Umlauf umgewälzt werden kann und somit ein Teil des Zulaufs nur verhältnismäßig kurze Zeit im Reaktor verbleibt.

Der Erfindung liegt die Aufgabe zugrunde, ein Verfahren der eingangs genannten Art sowie eine Vorrichtung zur Durchführung des Verfahrens so auszugestalten, daß auf einfache und wirtschaftliche Weise die vorstehend beschriebenen Nachteile vermieden und unter Einhaltung einer hohen Raumbelastung eine hohe Betriebsstabilität und im Zusammenwirken mit dieser ein hoher Wirkungsgrad erreicht werden kann.

Diese Aufgabe wird erfindungsgemäß dadurch gelöst, daß zusätzlich auch behandeltes Substrat strömungsmäßig getrennt vom Filterbett in einem Aufwärtsstrom geführt und im oberen Bereich der Behandlungszone direkt aus dem Aufwärtsstrom abgezogen wird.

Aufgrund dieser Verfahrensweise wird zum einen ausgeschlossen, daß ein Teil des Zulaufs nur teilbehandelt aus der Behandlungszone abgezogen wird. Zum anderen wird sichergestellt, daß die nicht fixierte Biomasse in der Behandlungszone verbleibt und somit die Gesamtkonzentration an fixierter und nicht fixierter, suspendierter Biomasse äußerst hoch gehalten wird. Damit können erfindungsgemäß betriebene Behandlungszonen gegenüber mit herkömmlichen Verfahren betriebenen Behandlungszonen um ca. 15 bis 20 % stärker belastet bzw. kleiner ausgelegt werden, wodurch die Raumabbauleistung äußerst hoch liegt. Zurückzuführen ist dies darauf, daß während des Aufstiegs des Substrats im Aufwärtsstrom getrennt vom Filterbett zum einen aufgrund der im Substrat suspendierten Biomasse der Abbauprozeß fortgesetzt und zum anderen mit der Länge der Aufwärtsströmung die suspendierte Biomasse allmählich von der Flüssigkeit getrennt wird. Diese Trennung von nicht fixierter Biomasse und Flüssigkeit hat außerdem zur Folge, daß ein Teil der freien Biomasse in den unteren Bereich der Behandlungszone absinkt und über den Umlauf wieder zum oberen Bereich der Behandlungszone zurückgeführt wird. In dem sich während des Aufwärtsstroms getrennt vom Filterbett ausbildenden Schlammbett können außerdem geruchsträchtige Zwischenprodukte fast vollständig eliminiert werden. Der Aufwärtsstrom kann dabei innerhalb und/oder außerhalb der Behandlungszone geführt werden.

Von Vorteil ist es dabei, den Aufwärtsstrom an fest fixierten Mikroorganismen vorbeizuführen. Damit kann der Anteil der insgesamt in der Behandlungszone vorhandenen, fest fixierten Biomasse erhöht und der nach Durchgang durch das Filterbett verbleibende Restabbau an organischem Substrat sowie die Beseitigung von geruchsintensiven Fettsäuren während des Aufwärtsstroms intensiviert werden.

Zur Verbesserung dieser Vorgänge ist es außerdem zweckmäßig, den Aufwärtsstrom auf einer geeigneten oder spiralförmigen Bahn zu führen, da dann der Reaktionsweg verlängert werden kann. Außerdem kann damit verhindert werden, daß das aufgrund der Abbauvorgänge auch während des Aufwärtsstroms entstehende Faulgas auf direktem Weg senkrecht nach oben aufsteigt und aufgrund einer Flotationswirkung suspendierte Biomasse nach oben trägt.

Als organische Substrate, die mit dem erfindungsgemäßen Verfahren abgebaut und zur Faulgaserzeugung genutzt werden können, kommen vor allem städtische und industrielle Abwässer, Abwasserschlämme sowie organische Rest- und Abfallstoffe in Frage, wobei für die Verarbeitung organischer Feststoffe genügend Zell- und Oberflächenwasser vorhanden sein muß.

Eine Vorrichtung zur Durchführung des Verfahrens umfaßt einen unter anaeroben Bedingungen betriebenen, im wesentlichen von oben nach unten durchströmten Reaktor mit einem Filterbett zur Ansiedlung von Mikroorganismen, der eine Zuleitung für zu behandelndes Substrat, eine Ableitung für behandeltes Substrat, eine Gasableitung für Faulgas sowie eine Rücklaufleitung vom unteren Bereich zum oberen Bereich aufweist. Erfindungsgemäß ist eine solche Vorrichtung dadurch gekennzeichnet, daß innerhalb und/oder außerhalb des Filterbettes mindestens ein Steigrohr angeordnet ist und das Steigrohr im oberen Bereich des Reaktors an die Ableitung für behandeltes Substrat angeschlossen ist.

Bei einem solchen Aufbau des Reaktors erfolgen die Beschickung des Reaktors mit zu behandeln dem und mit über die Rücklaufleitung im Umlauf geführtem teilbehandeltem organischem Substrat im Abstrombetrieb und der Ablauf durch die Steigrohre von der Reaktorsole zur Ablaufstelle am Reaktorkopf im Aufstrombetrieb. Dadurch wird vermieden, daß ein Teil des Zulaufs den Reaktor unbehandelt verläßt. Dabei sedimentiert während des Flüssigkeitsaufstiegs durch die Steigrohre die freie Biomasse, so daß die Reaktorableitung weitgehend frei von suspendierten Stoffen ist. Die sedimentierte Biomasse wird über die Rücklaufleitung vom unteren Bereich zum oberen Bereich des Reaktors zurückgeführt und in das Filterbett aufgegeben. Als Konsequenz erhöht sich die Konzentration an freier Biomasse im Reaktor und damit die Gesamtkonzentration an fixierter und suspendierter Biomasse, woraus sich eine hohe Abbauleistung des Reaktors ergibt.

Besonders vorteilhaft im Hinblick auf einen hohen CSB- und Fettsäureabbau ist es, wenn die Steigrohre eine gewellte und/oder gerippte Oberfläche aufweisen. Solche Steigrohre können beispielsweise Kunststoffrohre sein, wie sie als billige Massenware für die Elektroinstallation als Leerrohre hergestellt werden. Die gewellte und/oder gerippte Oberfläche der Steigrohre dient sowohl auf der Außen- als auch auf der Innenseite als Anwuchsfläche für die aktive Biomasse. Dadurch wird zum einen die Konzentration der aktiven Biomasse trotz des mit der Anordnung des oder der Steigrohre möglichen Verlustes an Filterbettvolumen zumindest ebenso hoch gehalten, wie wenn das Filterbett nicht von Steigrohren durchzogen wäre. Zum anderen bewirkt die auf der Innenwand der Steigrohre siedelnde Biomasse, an denen das ablaufende Substrat im Aufstrombetrieb vorbeistreicht, eine weitere Verringerung der CSB-Ablaufkonzentration und Abbau geruchsintensiver Fettsäuren.

Durch die gewellte oder gerippte Ausbildung der Oberfläche der Steigrohre können in der aufsteigenden Flüssigkeitsströmung Mikroturbulenzen entstehen, die eine gute Durchmischung zwischen freier Biomasse und Substrat ermöglichen. Im Hinblick auf den in den Steigrohren bezweckten Restabbau ist dieser Effekt durchaus wünschenswert. Für eine Sedimentation von freier Biomasse ist dieser Effekt jedoch eher hinderlich. Aus diesem Grund ist es zweckmäßig, die Steigrohre nur etwa auf der unteren Hälfte mit einer gewellten und/oder gerippten Oberfläche und im oberen Bereich mit einer weitgehend ebenen Oberfläche zu versehen. Auf diese Weise kann im oberen Bereich der Steigrohre eine Beruhigung der Strömungsverhältnisse erreicht werden, die für den Sedimentationsvorgang nützlich ist. Die Oberfläche der Steigrohre kann dabei zumindest im oberen Bereich eine offenporige Struktur aufweisen, die die Ansiedlung von Mikroorganismen sowohl auf der Außen- als auch auf der Innenseite begünstigt.

Zur Intensivierung der Sedimentations- und Abbauvorgänge in den Steigrohren ist es außerdem vorteilhaft, diese geneigt oder spiralförmig anzuordnen. Durch diese Anordnung wird nicht nur der Aufstiegsweg des Substrats von der Reaktorsole bis zur Ableitung im oberen Bereich des Reaktors verlängert, was die Wirksamkeit des Abbaus und der Sedimentation in diesem Bereich des Reaktors verbessert, sondern es wird gleichzeitig auch verhindert, daß das bei den Abbauvorgängen während des Aufwärtsstromes in den Steigrohren entstehende Faulgas auf direktem Wege senkrecht nach oben aufsteigt, wodurch eine Flotationsbewegung der nicht fixierten Biomasse zumindest eingeschränkt wird. Bei gewellter und/oder gerippter Ausbildung des geneigt oder spiralförmig angeordneten Steigrohres kann sich außerdem das entstehende Faulgas in den jeweiligen Vertiefungen der Steigrohre sammeln. Die Aufstiegsbewegung des Faulgases wird dadurch wesentlich verlangsamt, so daß Flotationsvorgänge weitgehend ausgeschlossen sind.

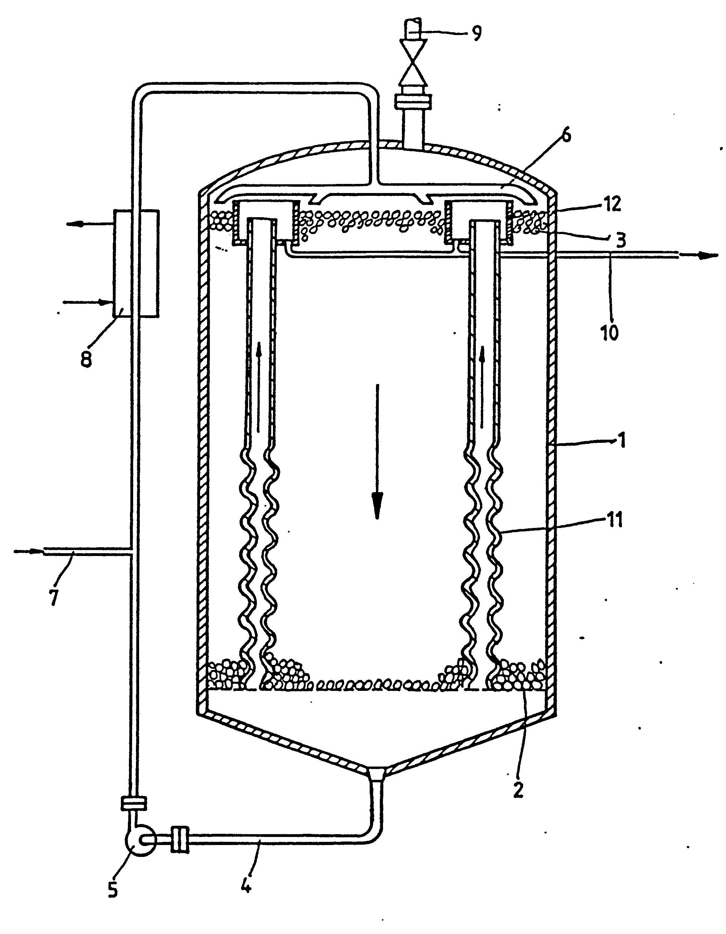

In der Zeichnung ist ein Ausführungsbeispiel eines zur Durchführung des erfindungsgemäßen Verfahrens geeigneten Reaktors schematisch dargestellt.

In der Figur ist mit 1 ein unter anaeroben Bedingungen betriebener, geschlossener Reaktor bezeichnet, in dem auf einem im unteren Bereich vorhandenen Sieb- oder Gitterboden 2 ein Filterbett 3 angeordnet ist. Vom Bodenbereich des Reaktors 1 unterhalb des Sieb- oder Gitterbodens 2 führt eine Rücklaufleitung 4 mit Pumpe 5 zu einer im oberen Bereich des Reaktors 1 über dem Filterbett 3 angeordneten Verteileinrichtung 6. An die Rücklaufleitung 4 ist eine Zuleitung 7 für zu behandelndes organisches Substrat angeschlossen, so daß zu behandelndes und teilbehandeltes Substrat über die Verteileinrichtung 6 von oben nach unten durch das Filterbett 3 des Reaktors 1 strömt. Zur Aufrechterhaltung der für den anaeroben Prozeß günstigsten Temperaturen ist in der Rücklaufleitung 4 ein Wärmetauscher 8 angeordnet. Um Wärmeabstrahlungen des Reaktors vermeiden zu können, ist dieser zweckmäßigerweise mit einer nicht dargestellen Isolierung umgeben. Beim anaeroben Abbauprozeß entstehendes Faulgas wird über eine im Kopfbereich des Reaktors 1 vorgesehene Gasableitung 9 abgeleitet, während behandeltes Substrat über eine Ableitung 10 abgezogen wird.

Das Filterbett 3 ist im vorliegenden Fall als Festbett gezeichnet und kann beispielsweise aus Sand, Blähton, Schlacke, Aktivkohle, Kunststoffringen oder aus vorzugsweise offenzelligen Schaumstoffelementen, wie Polyurethan-, Polyäthylen- oder Polypropylenelementen, oder aus Mischungen der einzelnen Materialien bestehen. Werden Schaumstoffe als Filterelemente verwendet, sollte sich die Größe der Poren zwischen 0,1 und 3 mm bewegen, so daß sichergestellt ist, daß die anaeroben Mikroorganismen nicht nur auf der Oberfläche der Filterelemente haften, sondern auch bis ins Innere der Filterelmenete hineinwachsen. Auf diese Weise kann die Konzentration der aktiven Biomasse äußerst hoch gehalten werden.

Statt der Ausbildung eines Festbetts besteht darüber hinaus bei Verwendung von schwimmfähigen Filterelementen auch die Möglichkeit ein Fließbett zu erzeugen. Infolge des Auftriebs der Filterelemente gelangen diese dann trotz der Abwärtsströmung nicht bis zum unteren Ende des Reaktors. Auf die Anordnung eines Gitter- oder Siebbodens im unteren Bereich des Reaktors kann dann verzichtet werden.

Würde bei einem vorstehend beschriebenen Reaktor die Ableitung für behandeltes Substrat im unteren Bereich des Reaktors angeordnet sein, würde ein großer Teil der neben der auf den Filterelementen fixierten Biomasse ebenso vorhandenen nicht fixierten, suspendierten Biomasse über die Ableitung ausgetragen und stünde für den anaeroben Abbauprozeß nicht mehr zur Verfügung. Zur Erzielung einer hohen Abbauleistung müßte außerdem ein Vielfaches des Zulaufs über die Rücklaufleitung im Kreislauf gefahren werden. Würde die Ableitung für behandeltes Substrat dagegen im oberen Bereich des Reaktors angeschlossen sein, bestünde die Gefahr, daß ein Teil des Zulaufs mit dem Ablauf des behandelten Substrats ausgetragen wird, was die Reinigungsleistung des Reaktors beeinträchtigen würde.

Um diese Nachteile auszuschließen, ist erfindungsgemäß das Filterbett 3 des Reaktors 1 von mindestens einem Steigrohr 11 durchsetzt, das unten den Gitter- oder Siebboden 2 durchstößt und das im oberen Bereich des Reaktors 1 an die Ableitung 10 für behandeltes Substrat angeschlossen ist. Im dargestellten Fall ist das Steigrohr 11 oben offen ausgebildet und von einem ebenso oben offenen, mit der Ableitung 10 in Verbindung stehenden Auffangbehälter 12 umgeben, so daß die aufsteigende Flüssigkeit aus dem Steigrohr 11 in den Auffangbehälter 12 überströmt und aus diesem in die Ableitung 10 gelangt. Die Verteileinrichtung 6 für zu behandelndes Substrat ist dabei so über dem Steigrohr 11 und dem Auffangbehälter 12 angeordnet, daß das zu behandelnde Substrat sich nicht mit dem behandelten Substrat vermischen kann.

Anstelle der Anordnung der Steigrohre im Inneren des Reaktors besteht auch die Möglichkeit, die Steigrohre an der Außenwand des Reaktors anzuordnen, wodurch dann das Filterbettvolumen im Inneren des Reaktors nicht beeinträchtigt ist.

Durch die oben offene Ausbildung des Steigrohres 11 und die Überströmung von behandeltem Substrat aus dem Steigrohr 11 in den Auffangbehälter 12 besteht die Möglichkeit sich während der Aufstiegsphase durch das Steigrohr 11 bildendes Faulgas nach oben aus dem behandelten Substrat abzuleiten. Dabei findet während des Flüssigkeitsaufstiegs durch das Steigrohr 11 nicht nur ein weiterer Abbauprozeß aufgrund der in der Flüssigkeit vorhandenen suspendierten und eventuell im Steigrohr fixierten Biomasse statt, sondern die nicht fixierte Biomasse sedimentiert allmählich und setzt sich nach unten in den unteren Bereich des Reaktors 1 ab. Von diesem gelangt die abgesetzte Biomasse in die Rücklaufleitung 4. Ein Ausschwemmen von nicht fixierter Biomasse wird somit durch die Anordnung des Steigrohres vermieden, so daß die Gesamtkonzentration an im Reaktor vorhandener Biomasse äußerst hoch gehalten werden kann. Ebenso wird ein Vermischen von Zulauf und Ablauf vermieden, so daß die Ableitung von behandeltem Substrat nicht durch zu behandelndes Substrat beeinträchtigt wird.

Wie dargestellt, ist es zweckmäßig, wenn die Steigrohre im unteren Bereich eine gewellte und/oder gerippte Oberfläche aufweisen, wodurch sie besonders gut als zusätzliche Ansiedlungsfläche für Mikroorganismen geeignet sind. Begünstigt wird dieser Effekt noch durch Verwendung eines offenporigen Materials für die Steigrohre. Dazu kommt, daß die gewellte oder gerippte Oberfläche Verwirbelungen zwischen Flüssigkeit und nicht fixierter Biomasse hervorruft, die den Abbauprozeß intensivieren. Da solche Verwirbelungen für ein Absetzen von suspendierter Biomasse hinderlich sind, weist das Steigrohr im oberen Bereich eine ebene Ausbildung der Oberfläche auf.

Statt der dargestellten senkrechten Anordnung des Steigrohres besteht auch die Möglichkeit, dieses geneigt oder spiralförmig durch das Filterbett 3 oder spiralförmig außen am Reaktor zu verlegen, um den Reaktionsweg zu verlängern.

Nachfolgend ist ein Auslegungsbeispiel eines erfindungsgemäßen Reaktors im Vergleich zu einem herkömmlichen Aufstromreaktor und einem herkömmlichen, von oben nach unten durchströmten Filterbettreaktor angegeben, aus dem eindeutig hervorgeht, daß bei dem erfindungsgemäßen Reaktor das erforderliche Reaktorvolumen bei konstant hoher Abbauleistung verhältnismäßig klein gehalten werden kann.

**Zahlenbeispiel**

1. <u>Zu behandelndes Abwasser</u> (z.B. Brennereiabwasser)

   Zulauf         1000 m³/d; 41,7 m³/h

   CSB            1500 mg/l; 10000 kg/d

2. <u>Bekannter Aufstromreaktor</u>

   CSB-Abbau                                    90 %  =  9000 kg/d

   $CH_4$-Produktion                            0,35 m³/kg abgeb. CSB = 3150 m³/d

   $CH_4$-Anteil                                55 %

   Gasanfall                                    5727 m³/d

   Max. zulässige spez. Gasproduktion zur Vermeidung von Biomasseverlusten                                       4 m³/m³ Reaktor · d

   Erforderliches Reaktorvolumen                1432 m³

   Raumbelastung                                7 kg CSB/m³ · d

   Raumabbauleistung                            6,3 kg CSB/m³ · d

3. <u>Bekannter anaerober Filter mit gewellten Kunststoffringen, Abstrom-</u>
   <u>betrieb, Ablauf entspricht äquivalenter Menge von Zulauf + Ablauf-Gemisch</u>

   Umlauf                                       = 15 x Zulauf

   Maximaler Abbaugrad                          90 %

   Unbehandelter Zulauf-Anteile
   im Ablauf                                    6,3 % = 630 CSB/d

   Gesamtelimination im Reaktor                 9370 · 0,9 = 8433 kg CSB/d

   CSB-Geahlt im Ablauf                         630 + 937 = 1567 kg CSB/d

   Tatsächlicher CSB-Abbaugrad                  84,3 %

   Zulässige Schlammbelastung                   0,5 g CSB/kg TS · d

   Erforderliche Schlamm-Menge                  20 000 kg

   Schlammkonzentration                         25 kg/m³ fixierte Biomasse + 0,5 kg/m³
                                                suspendierte Biomasse

   Gesamte Biomassenkonzentration              25,5 kg/m³

   Erforderliches Reaktorvolumen               784 m³

4. <u>Erfindungsgemäßer Reaktor</u>

| | |
|---|---|
| Umlauf | = 15 x Zulauf |
| Maximaler Abbaugrad | 90 % |
| Unbehandelter Zulaufanteil im Ablauf | = 0 % |
| Gesamtelimination im Reaktor | 9000 kg CSB/d |
| Zulässige Schlammbelastung | 0,5 kg CSB/m³/d |
| Erforderliche Schlamm-Menge | 20 000 kg |
| Schlammkonzentration | 25 kg/m³ fixierte Biomasse + 3 kg/m³ suspendierte Biomasse = 28 kg/m³ |
| Erforderliches Reaktorvolumen | 714 m³ |

5. <u>Vergleich der drei Reaktortypen</u>

| Kennzahlen | Aufstromreaktor | Anaerober Filter Abstrombetrieb, Umlauf | Erfindungsgemäßer Reaktor |
|---|---|---|---|
| Reaktorvolumen | 1432 m³ | 784 m³ | 714 m³ |
| CSB-Abbau | 90 % | 84,3 % | 90 % |
| Raumbelastung (CSB) | 7 kg/m³·d | 12,8 kg/m³·d | 14 kg/m³·d |
| Raumabbauleistung | 6,3 kg/m³·d | 10,7 kg/m³·d | 12,6 kg/m³·d |
| Flüchtige Säuren im Ablauf (Geruchsträchtig) | ≤ 200 mg/l | >800 mg/l | ≤200 mg/l. |

**Patentansprüche**

1. Verfahren zum anaeroben Abbau von organischem Substrat bei dem zu behandelndes organisches Substrat im Abwärtsstrom durch ein in einer Behandlungszone vorhandenes, der Ansiedlung von Mikroorganismen dienendes Filterbett geleitet wird und im Filterbett behandeltes Substrat in einem Umlauf vom unteren zum oberen Bereich der Behandlungszone zurückgeführt wird, dadurch gekennzeichnet, daß zusätzlich auch behandeltes Substrat strömungsmäßig getrennt vom Filterbett in einem Aufwärtsstrom geführt und im oberen Bereich der Behandlungszone direkt aus dem Aufwärtsstrom abgezogen wird.

2. Verfahren nach Anspruch 1, dadurch gekennzeichnet, daß der Aufwärtsstrom an fest fixierten Mikroorganismen vorbeigeführt wird.

3. Verfahren nach Anspruch 1 oder 2, dadurch gekennzeichnet, daß der Aufwärtsstrom auf einer geneigten oder spiralförmigen Bahn geführt wird.

4. Vorrichtung zur Durchführung des Verfahrens nach einem der Ansprüche 1 bis 3, mit einem unter anaeroben Bedingungen betriebenen, im wesentlichen von oben nach unten durchströmten Reaktor mit einem Filterbett zur Ansiedlung von Mikroorganismen, der eine Zuleitung für zu behandelndes Substrat, eine Ableitung für behandeltes Substrat, eine Gasableitung für Faulgas sowie eine Rücklaufleitung vom unteren Bereich zum oberen Bereich aufweist, dadurch gekennzeichnet, daß innerhalb und/oder außerhalb des Filterbetts (3) mindestens ein Steigrohr (11) angeordnet ist und das Steigrohr (11) im oberen Bereich des Reaktors (1) an die Ableitung (10) für behandeltes Substrat angeschlossen ist.

5. Vorrichtung nach Anspruch 4, dadurch gekennzeichnet, daß das Steigrohr (11) eine gewellte und/oder gerippte Oberfläche aufweist.

6. Vorrichtung nach Anspruch 4 oder 5, dadurch gekennzeichnet, daß das Steigrohr (11) geneigt angeordnet ist.

7. Vorrichtung nach Anspruch 4 oder 5, dadurch gekennzeichnet, daß das Steigrohr (11) spiralförmig angeordnet ist.

## Claims

1. A process for the anaerobic decomposition of an organic substrate in which the organic substrate to be treated flows downwardly through a filter bed which is arranged in a treatment zone and which serves for the settlement of micro-organisms, and where substrate treated in the filter bed passes in a cycle from the lower to the upper region of the treatment zone, characterised in that treated substrate additionally is led upwardly from the filter bed in a separate upward flow and in the upper region of the treatment zone is directly withdrawn from the upward flow.

2. A process as claimed in Claim 1, characterised in that the upward flow is led past firmly fixed micro-organisms.

3. A process as claimed in Claim 1 or Claim 2, characterised in that the upward flow is led along an inclined or spiral-shaped path.

4. Apparatus for carrying out the process claimed in one of Claims 1 to 3, comprising a reactor which is operated under anaerobic conditions, is essentially transversed from above to below and is provided with a filter bed serving for the settlement of micro-organisms, an inlet pipe for the substrate to be treated, an outlet pipe for treated substrate, a gas discharge pipe for sewage gas, and a return pipe from the lower region to the upper region, characterised in that at least one standpipe (11) is arranged inside and/or outside the filter bed (3) and that, in the upper region of the reactor (1) the standpipe (11) is connected to the outlet pipe (10) for treated substrate.

5. Apparatus as claimed in Claim 4, characterised in that the standpipe (11) has a corrugated and/or ribbed surface.

6. Apparatus as claimed in Claim 4 or Claim 5, characterised in that the standpipe (11) is arranged to be inclined.

7. Apparatus as claimed in Claim 4 or Claim 5, characterised in that the standpipe (11) is spiral-shaped.

## Revendications

1.- Procédé de dégradation amélioré d'un substrat organique, dans lequel le substrat organique à traiter est déplacé dans un courant descendant à travers un lit de filtration prévu dans une zone de traitement et servant à fixer des micro-organismes, le substrat ainsi traité étant recyclé, dans des moyens de circulation, à partir de la partie inférieure de la zone de traitement vers la partie supérieure de celle-ci, caractérisé en ce qu'en outre, du substrat traité est également acheminé dans un courant ascendant, par un trajet d'écoulement séparé, et retiré directement du courant ascendant, dans la partie supérieure de la zone de traitement.

2.- Procédé selon la revendication 1, caractérisé en ce qu'on fait passer le courant ascendant devant des micro-organismes fermement fixés.

3.- Procédé selon la revendication 1 ou 2, caractérisé en ce qu'on fait suivre au courant ascendant un trajet incliné ou hélicoïdal.

4.- Dispositif pour la mise en oeuvre du procédé selon une des revendications 1 à 3, comportant un réacteur fonctionnant dans des conditions anaérobies et parcouru par des courants s'écoulant sensiblement du haut vers le bas, ledit réacteur étant pourvu d'un lit de filtration assurant la fixation de micro-organismes, ce réacteur comportant un conduit d'amenée de substrat traité, un conduit d'évacuation de gaz de putréfaction, ainsi qu'un conduit de recyclage de la partie inférieure vers la partie supérieure, caractérisé en ce qu'au moins un conduit montant (11) est disposé à l'intérieur et/ou à l'extérieur du lit de filtration (3) et est relié, à la partie supérieure du réacteur (1) au conduit d'évacuation (10) de substrat traité.

5.- Dispositif selon la revendication 4, caractérisé en ce que le conduit montant (11) présente une surface ondulée et/ou nervurée.

6.- Dispositif selon la revendication 4 ou 5, caractérisé en ce que le conduit montant (11) est monté de manière à être incliné.

7.- Dispositif selon la revendication 4 ou 5, caractérisé en ce que le conduit montant (11) présente une configuration hélicoïdale.